(19) Europäisches Patentamt
European Patent Office
Office européen des brevets

(11) Numéro de publication: **0 046 706**
**B1**

(12) # FASCICULE DE BREVET EUROPEEN

(45) Date de publication du fascicule du brevet: **10.04.85**

(51) Int. Cl.[4]: **C 08 F 8/32,** C 02 F 5/12

(21) Numéro de dépôt: **81401293.6**

(22) Date de dépôt: **12.08.81**

(54) **Nouveaux agents séquestrants supportés, leur procédé de préparation et leur application à la synthèse organique et à l'extraction des métaux.**

(30) Priorité: **27.08.80 FR 8018562**

(43) Date de publication de la demande: **03.03.82 Bulletin 82/9**

(45) Mention de la délivrance du brevet: **10.04.85 Bulletin 85/15**

(84) Etats contractants désignés: **AT BE CH DE FR GB IT LI LU NL SE**

(56) Documents cités:
**DE - B - 1 234 385**
**GB - A - 1 026 838**

**Angew. Chem. Int. (Ed. Engl.) 18, 421-429 (1979)**

(73) Titulaire: **RHONE-POULENC SPECIALITES CHIMIQUES, "Les Miroirs" 18, Avenue d'Alsace, F-92400 Courbevoie (FR)**

(72) Inventeur: **Soula, Gérard, 33, rue Nungesser, F-69330 - Meyzieu (FR)**

(74) Mandataire: **Cazes, Jean-Marie et al, RHONE-POULENC RECHERCHES Service Brevets Chimie et Polymères 25, quai Paul Doumer, F-92408 Courbevoie Cedex (FR)**

**EP 0 046 706 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet de nouveaux agents séquestrants supportés.

On entend, au sens de la présente invention, par «agent séquestrant supporté» un agent capable de se combiner avec des cations pour former un complexe, ledit agent étant fixé sur un support.

La présente invention concerne également un procédé de préparation des nouveaux agents séquestrants et leur application à la synthèse organique et à l'extraction des métaux.

On connaît dans l'art antérieur (Angew. Chem. Int.) Ed. Engl. 18, 421–429 (1979) des résines polystyrènes portant des groupements ammonium quaternaires de formule générale:

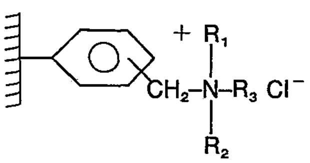

dans laquelle $R_1$ $R_2$ et $R_3$ sont essentiellement des radicaux alkyle.

Le principal inconvénient qui limite notablement leur utilisation à l'échelle industrielle est leur instabilité à des températures supérieures à environ 100 °C.

Dans la référence citée ci-dessus, sont également décrits des «éthers couronnes» et des «cryptants» greffés sur des polystyrènes obtenus par réaction du dérivé approprié, de l'éther couronne ou du cryptant avec un polystyrène chlorométhylé.

Ces produits, par exemple:

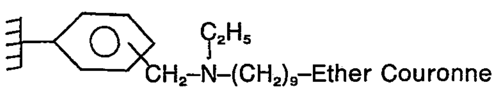 et

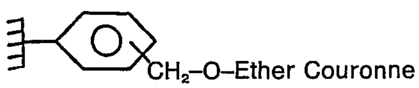

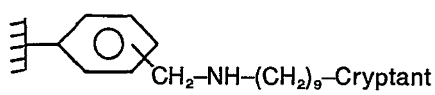

sont plus utiles que les sels d'ammonium supportés décrits précédemment compte tenu de leur plus grande activité et de leur meilleure stabilité thermique. Il n'en demeure pas moins qu'ils présentent un certain nombre d'inconvénients qui ne favorise pas leur mise en œuvre à l'échelle industrielle. En effet, les éthers-couronnes et les cryptants sont en eux-mêmes des composés ayant une structure très sophistiquée. Il en découle que leur procédé de préparation et leur mise en œuvre est délicate. De plus, leur prix de revient est extrêmement élevé. Ces mêmes inconvénients se retrouvent multipliés au niveau des produits obtenus après greffage sur le polystyrène.

Les trois types de produits énumérés ci-dessus ont été testés dans l'art antérieur dans des réactions de substitutions nucléophile par catalyse de transfert de phase liquide-liquide comme par exemple dans la réaction d'échange d'halogénure du bromooctane en iodo-1 octane et dans des réactions de substitution nucléophile par catalyse de transfert de phase solide-liquide comme par exemple dans la réaction du chlorure de benzyle avec les acétates alcalins pour donner l'acétate de benzyle (Pure and Appl. Chem. Vol. 51 pp 2313–2330 1979).

La présente invention pallie les inconvénients de l'art antérieur.

La présente invention a donc pour objet, un agent séquestrant supporté, caractérisé en ce qu'il est constitué par un support polymère organique réticulé et par une pluralité de groupes fonctionnels, fixés sur ledit support, de formule générale:

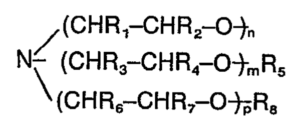 (I)

dans laquelle $R_1$, $R_2$, $R_3$, $R_4$, $R_6$ et $R_7$ identiques ou différents sont chacun un atome d'hydrogène ou un radical alkyle ayant de 1 à 4 atomes de carbone, $R_5$ et $R_8$ identiques ou différents représentent un atome d'hydrogène, un radical alkyle ou cycloalkyle ayant de 1 à 12 atomes de carbone, un radical phényle, un radical $-C_qH_{2q}-\Phi-$ ou $C_qH_{2q+1}-\Phi-$ avec q supérieur ou égal à 1 et inférieur ou égal à 12, et dans laquelle n, m, et p identiques ou différents sont supérieurs ou égaux à 1 et inférieurs ou égaux à 10.

Selon un mode de réalisation préférentiel de l'invention $R_1$, $R_2$, $R_3$, $R_4$, $R_6$ et $R_7$ identiques ou différents, représentent un atome d'hydrogène ou le radical méthyle et $R_5$ et $R_8$ identiques ou différents représentent un atome d'hydrogène ou un radical alkyle ayant de 1 à 4 atomes de carbone. Selon un autre mode de réalisation préférentiel de l'invention, n, m et p identiques ou différents sont supérieurs ou égaux à 1 et inférieurs ou égaux à 6.

On peut citer comme exemples de groupes fonctionnels, les groupes de formules suivantes:

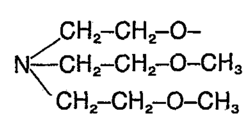

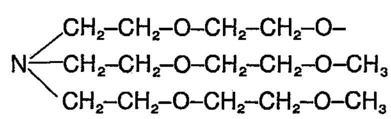

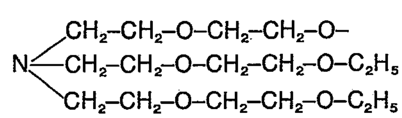

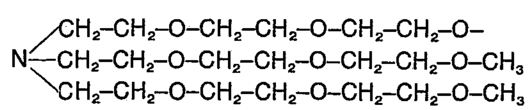

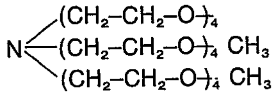

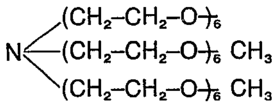

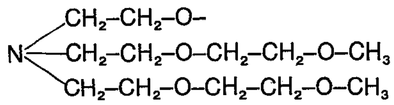

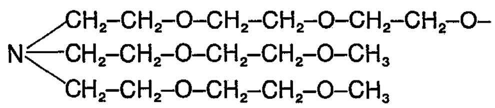

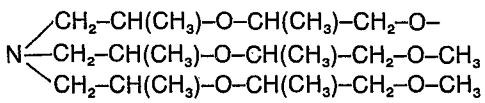

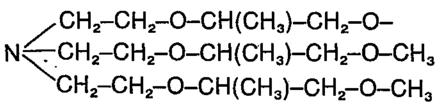

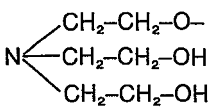

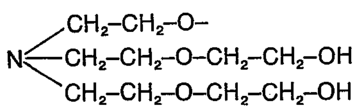

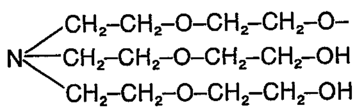

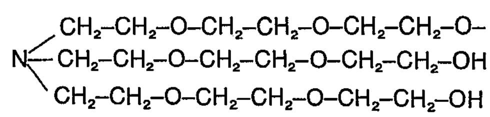

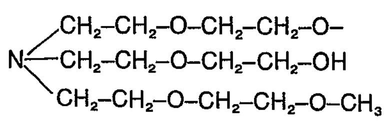

Le support peut dériver de tout polymère organique réticulé comportant des groupements substituables par les groupements fonctionnels de formule I.

On peut citer comme exemples de polymères organiques adaptés à la présente invention, les polymères dérivés de composés vinylaromatiques tels que le styrène, le methylstyrène et les copolymères de composés vinylaromatiques et de diènes conjugués en $C_4$–$C_6$ tels que les copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule I greffés sur le polystyrène soient actifs. Pour cela, il faut que les molécules du solvant dans lequel l'agent séquestrant supporté sera mis en œuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à 10%. Encore plus préférentiellement, le taux de réticulation est inférieur à 5% environ.

Le groupement substituable est de préférence le chlore ou le brome du radical chloro ou bromo methyl $-CH_2Cl$ ou $-CH_2Br$ fixé sur le noyau benzénique du polystyrène.

Selon un mode de réalisation particulier de l'invention, le pourcentage de noyaux benzéniques du polystyrène portant un groupement fonctionnel est supérieur à 5%. Encore plus préférentiellement, ce pourcentage est supérieur à 10%.

On peut représenter les agents séquestrants supportés préférés par la formule suivante:

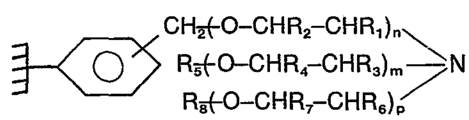

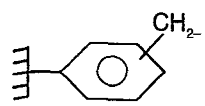

dérive du polystyrène chloro ou bromo méthylé réticulé par le divinylbenzène de formule:

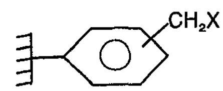

où X représente Cl ou Br.

La présente invention concerne également un procédé de préparation des agents séquestrants définis ci-dessus. Le procédé selon l'invention est caractérisé en ce que l'on fait réagir le composé de formule:

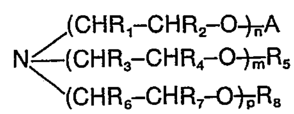 (II)

où A représente un métal alcalin et où $R_1$, $R_2$, $R_3$, $R_4$, $R_5$, $R_6$, $R_7$, $R_8$, n, m et p ont la signification précédente avec un polymère organique réticulé comportant des groupements substituables tels que définis ci-dessus, à une température comprise entre 20 et 150 °C dans un solvant aprotique.

Selon un mode de réalisation particulier de l'invention A représente le sodium ou le postassium.

Selon un autre mode de réalisation particulier de l'invention le solvant est choisi de préférence parmi le groupe comprenant: le benzène, le toluène, la N-methylpyrrolidone, l'hexamethylphosphorotriamide, le dioxane, le tetrahydrofuranne, le dimethoxyéthane, le sulfolane.

Selon un autre mode de réalisation particulier de l'invention, on fait réagir, avec le composé de

formule (II), un polystyrène chloro ou bromo méthylé ayant un taux de réticulation par le divinylbenzène inférieur à 10% et ayant un taux de chlore ou de brome compris entre 0,5 et 7 milliéquivalents de chlore ou de brome/g.

Les agents séquestrants supportés selon l'invention forment des complexes avec le cation ammonium $NH_4+$ et ses dérivés et les cations dérivés des mélanges des groupes $I_A$, $II_A$, $III_A$, $IV_A$, $V_A$, $VI_A$, $VII_A$, VIII, $I_B$, $II_B$, $III_B$, $IV_B$ et $V_B$ (Classification périodique de la Société Chimique de France).

Plus particulièrement, les agents séquestrants supportés selon l'invention forment des complexes avec:

- $NH_4^+$ et ses dérivés $RNH_3^+$ où R est un radical alkyle ou aryle
- et les cations dérivés des métaux
  Li, Na, K, Rb, Co
  Mg, Ca, Sr, Ba
  Sc, Y, La et lanthanides, Ac et actinides
  Ti, Zr, Hj
  V, Nb, Ta,
  Cr, Mo, W
  Mn, Tc, Re
  Fe, Co, Ni
  Ru, Rh, Pd
  Os, Ir, Pt
  Cu, Ag, Au
  Zn, Cd, Hg
  Al, Ga, In, Tl
  Ge, Sn, Pb
  Sb, Bi

L'invention concerne également l'application de ces agents séquestrants à la synthèse organique. En effet, les agents séquestrants supportés selon l'invention permettent la réaction dans un solvant, d'un réactif ionique organique ou minéral normalement insoluble dans ce solvant avec un substrat soluble dans le solvant, les agents séquestrants ajoutés dans le milieu réactionnel permettant la mise en contact dans le milieu du réactif et du substrat.

Comme cela a été dit précédemment, bien que le support soit insoluble dans le solvant, ce dernier peut pénétrer au sein du polymère réticulé et véhiculer jusqu'aux groupes fonctionnels de formule I greffés sur le support, le réactif ionique. Les groupes fonctionnels complexent alors le cation du réactif ionique, l'entité complexée pouvant être considérée comme étant alors en solution dans le solvant où le substrat est soluble.

Cela permet à la réaction d'avoir lieu.

Ces réactifs anioniques, organiques ou minéraux ont pour formule générale $M^+$ $Y^-$ où $M^+$ représente l'un des cations précités et où $Y^-$ représente un anion organique ou minéral. On peut citer comme exemples non limitatifs d'anions minéraux: $CN^-$, $SCN^-$, $F^-$, $Bn^-$, $I^-$ et comme exemples non limitatifs d'anions organiques, les anions phénates, alcoolates, thioalcoolates, thiophénates, silanolates et carboxylates.

On peut citer comme exemples de synthèses pouvant être mise en œuvre avec les agents séquestrants supportés selon l'invention, les synthèses faisant intervenir des réactions de substitution nucléophile comme par exemple la substitution d'un halogène sur un substrat aliphatique ou aromatique par un groupement $Y^-$ tel que défini ci-dessus.

Les avantages découlant de la mise en œuvre des agents séquestrants supportés selon l'invention résident en premier lieu dans leur séparation facile du milieu réactionnel en fin de réaction. Cette séparation peut se faire par simple décantation ou filtration. En second lieu, il faut souligner le taux de recyclage possible important de l'agent séquestrant ce qui améliore l'économie du procédé.

Elle concerne également l'application des agents séquestrants à l'extraction des métaux par le même mécanisme que celui expliqué dans le cas de la synthèse organique. Il est en effet possible d'extraire d'une solution aqueuse, des sels organiques ou minéraux par simple contact de cette solution avec au moins un agent séquestrant supporté selon l'invention éventuellement imprégné par un solvant pour que ce dernier, comme cela a été dit précédemment, activent les groupes fonctionnels de formule I si c'est nécessaire.

On peut citer comme exemple, l'extraction du picrate de sodium d'une solution aqueuse.

Les avantages découlant de la mise en œuvre des agents séquestrants selon l'invention dans l'extraction des métaux résident principalement dans le fait qu'il n'y a pas de contamination par les agents séquestrants supportés de la phase aqueuse de laquelle on extrait les sels métalliques. D'autre part, le taux élevé de recyclage possible après régénération de l'agent séquestrant améliore l'économie du procédé.

Les composés de formule:

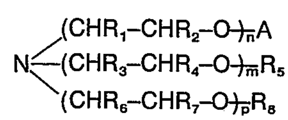

(II)

peuvent être obtenus par réaction du métal alcalin sous forme métallique en milieu solvant organique (toluène, tetrahydrofuranne, dioxanne par exemple) à une température comprise entre environ 20 et 90 °C pendant 4 à 6 heures avec l'amino alcool:

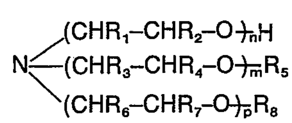

(III)

lui-même obtenu par réaction d'un polyalkylène glycol de formule

$$HO-(CHR_2-CHR_2O)_nH$$

où $R_1$, $R_2$ et n ont la signification précédente avec une bis(polyoxaalkylamine) de formule:

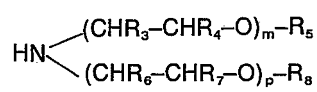

où $R_3$ à $R_8$ et m et p ont la signification précédente, le rapport molaire du polyalkylène glycol à la bis(polyoxaalkylamine) étant d'au moins 1,5 en présence d'un catalyseur d'hydrogénation-deshydrogénation à une température comprise entre 120 °C et 220 °C, de préférence entre 150 °C et 200 °C.

On peut citer comme exemples de catalyseur, les catalyseurs au nickel du type nickel Raney ou Harshaw, la quantité de catalyseur pouvant être comprise entre 1 et 15% en poids (de préférence entre 2 et 6%).

Le rapport molaire du polyalkylène glycol à la bis(polyoxaalkylamine) est compris de préférence entre 1,5 fois et 10 fois la stœchiométrie (encore plus préférentiellement entre 2 et 6 fois la stœchiométrie). On opère de préférence en présence d'hydrogène (on utilise de 1 à 10% d'hydrogène en poids par rapport au polyalkylène glycol mis en œuvre) sous pression autogène.

L'invention va maintenant être plus complètement décrite à l'aide des exemples qui vont suivre et qui ne sauraient être considérés comme limitant de façon quelconque l'invention.

Exemple:

Dans un réacteur tricol de 250 ml, équipé d'un agitateur magnétique, d'un réfrigérant ascendant et d'une arrivée d'azote, on introduit successivement 100 cm³ de toluène anhydre, 13 g de N(hydroxy 8′ dioxa 3′, 6′, octyl)hexaoxa 2, 5, 8, 14, 17, 20 aza-11, heneicosane préparé comme indiqué ci-dessus et 0,69 g de sodium métal. Après 6 H à 60 °C sous agitation, le sodium a totalement disparu. On introduit alors 14,8 g de polystyrène réticulé par 2% de divinylbenzène et contenant 1,35 × $10^{-3}$ groupement chloromethyl par gramme de polymère que l'on notera 1,35 meq de chlore/g. Le mélange est chauffé à 60 °C pendant 48 heures sous atmosphère d'azote. Après refroidissement, le polymère est filtré et lavé à l'eau (pour éliminer les sels inclus) puis au méthanol.

Le produit est ensuite séché sous vide à 50 °C.

On obtient ainsi 20 g d'un amino-éther greffé sur le polystyrène dont la formule générale est la suivante.

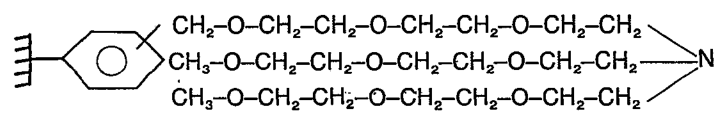

Le taux de greffage est de 77%.

Préparation du N(hydroxy 8′ dioxa 3′, 6′ octy) aza 11 hexaoxa 2,5,8,14,17,20 heneicosane:

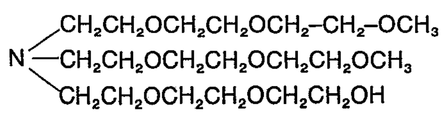

Dans un ballon tetracol de 2 litres équipé d'une agitation, d'une arrivée d'hydrogène, d'une colonne et d'un condenseur pour recueillir l'eau, on charge:

- aza 11 hexaoxa 2,5,8,14,17,20 heneicosane 250 g (0,80 mole)
- triéthylène glycol 550 g (3,66 moles)
- Nickel Raney déshydraté 50 g.

Après 5 heures de réaction à 180° sous courant d'hydrogène (11/mn), le Nickel Raney est filtré et le filtrat est étété jusqu'à 300° sous 0,1 mmHg (13,3 Pa).

On obtient 325 g de l'aminoalcool cherché, soit un rendement de 92,2%.

Exemple 2:

Dans les conditions opératoires définies dans l'exemple 1, on introduit 100 cm3 de toluène, 14,3 g de N(hydroxy-8′, dioxa-3,6 octyl) tétraoxa 3,6,12,15 aza-9 heptadécane préparé de façon similaire à celle décrite ci-dessus et 0,69 g de sodium. Après 6 H à 60 °C, on ajoute 5 g de polystyrène réticulé avec 8% de divinylbenzène et contenant 4 meq/g de chlore. On maintient le chauffage pendant 20 H puis on refroidit et on filtre le mélange.

Le précité est lavé à l'eau puis au méthanol.

Après séchage à 50 °C sous vide, on obtient 9,2 g de polymère greffé dont la formule générale est la suivante:

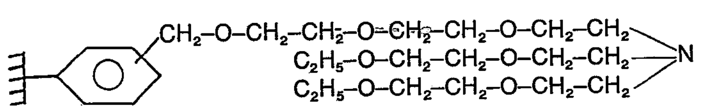

Le taux de greffage est de 65%.

Exemple 3:

Dans les conditions opératoires définies dans l'exemple 1, on introduit 300 cm³ de toluène, 36,05 g de N(hydroxy-5′, oxa-3′, pentyl) aza-8, tétraoxa-2,5, 11,14 pentadécane et 2,41 g de sodium. Après chauffage à 60 °C pendant 20 H et à 90 °C pendant 4 H, le sodium a totalement réagi. On refroidit alors à 60 °C puis on introduit 52 g de polystyrène réticulé par 2% de divinylbenzène et contenant 1,3 meq chlore/g.

Après 40 H à 60 °C sous azote, le mélange est refroidi, filtré et le polymère est lavé à l'eau puis au méthanol. Après séchage sous vide à 50 °C, on obtient 66 g de polymère greffé dont la formule générale est la suivante:

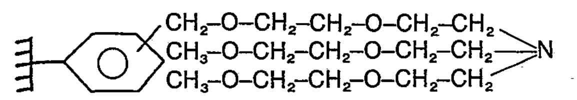

Le taux de greffage est de 75%.

Exemple 4:

Dans les conditions opératoires définies dans l'exemple 1, on introduit 100 cm³ de toluène, 10,9 g de N(hydroxy-2', éthyl) tétraoxa-3,6,12,15, aza-9, heptadécane et 0,69 g de sodium. Après 6 H à 60 °C, on ajoute 4,65 g de polystyrène réticulé avec 4% de divinylbenzène et contenant 4,3 meq de chlore/g. Après 30 H à 80 °C, le mélange est refroidi et filtré. Le précipité est lavé à l'eau et au méthanol puis séché à 50 °C sous vide. On obtient 5 g de polymère greffé dont la formule générale est la suivante:

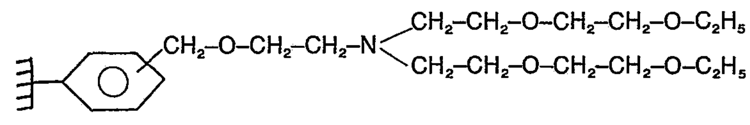

Exemple 5:

Dans les conditions opératoires définies dans l'exemple 1 on introduit 100 ml de toluène, 60 g de tris(dioxa-3,6, hydroxy-8 octyl) amine et 0,69 g de sodium. Après chauffage à 50 °C pendant 24 heures, on introduit 5 g de polystyrène réticulé par 2% de divinylbenzène et contenant 4 meq chlore/g.

Après 56 heures à 60 °C, le mélange est refroidi, filtré et le polymère est lavé à l'eau puis au méthanol. Après séchage sous vide à 50 °C, on obtient 9,5 g de polymère greffé dont la formule générale est:

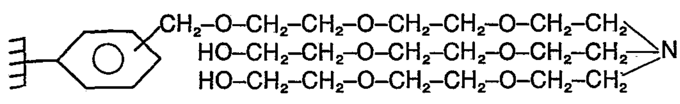

Le taux de greffage est de 63%.

Exemple 6:

Le composé préparé dans l'exemple 1 est utilisé pour réaliser la réaction suivante:

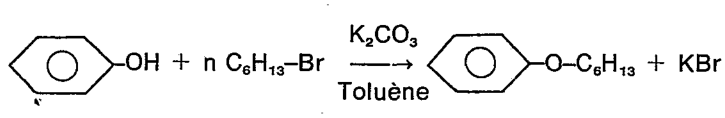


Dans un réacteur de 100 ml équipé d'un réfrigérant ascendant et d'une agitation magnétique, on introduit 37 g de toluène, 3,77 g de phénol, 6,6 g de n-bromohexane et 2,8 g de $K_2CO_3$ et 0,96 g de produit obtenu selon l'exemple n° 1. Le mélange est chauffé à reflux sous agitation pendant 20 H puis refroidi. Le rendement en phénoxy-1 hexane est de 80%. Le mélange est filtré et le précipité obtenu est lavé à l'eau puis au méthanol. Après séchage à 50 °C sous vide, on obtient 0,94 g de polymère identique à celui introduit.

Le recyclage dans une réaction ultérieure conduit au même résultat.

Sans catalyseur, le taux de transformation est de 10% après 20 H 00.

Exemple 7:

Le composé préparé dans l'exemple 1 est utilisé dans la réaction suivante:

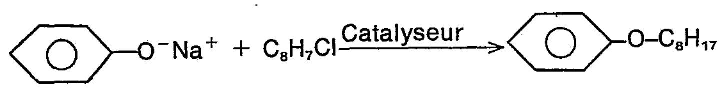


Dans un réacteur de 100 ml équipé d'un réfrigérant ascendant et d'un agitateur magnétique, on introduit 17 g de chloro-1 octane, 1,16 g de phénate de sodium anhydre et 0,31 g de produit préparé selon l'exemple n° 1. Le mélange est chauffé à 140 °C pendant 3 H 30. On obtient alors le phénoxy-1 octane avec un rendement de 96%. Le mélange, après refroidissement est filtré et le précipité est lavé par l'eau et le méthanol.

Après séchage à 50 °C sous vide, on récupère 0,30 g de polymère. Le recyclage de ce produit, dans un essai ultérieur, conduit à des résultats identiques.

**Revendications pour les Etats contractants BE CH DE FR GB IT LI LU NL SE**

1. Agent séquestrant supporté, caractérisé en ce qu'il est constitué par un support polymère

organique réticulé et par une pluralité de groupes fonctionnels, fixés sur ledit support, de formule générale:

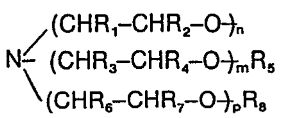

(I)

dans laquelle $R_1$, $R_2$, $R_3$, $R_4$, $R_6$ et $R_7$ identiques ou différents sont chacun un atome d'hydrogène ou un radical alkyle ayant de 1 à 4 atomes de carbone, $R_5$ et $R_8$ identiques ou différents représentent un atome d'hydrogène, un radical alkyle ou cycloalkyle ayant de 1 à 12 atomes de carbone, un radical phényle, un radical $-C_qH_{2q}-\Phi-$ ou $-C_qH_{2q+1}-\Phi-$ avec q supérieur ou égal à 1 et inférieur ou égal à 12, et dans laquelle n, m et p identiques ou différents sont supérieurs ou égaux à 1 et inférieurs ou égaux à 10.

2. Agent séquestrant supporté selon la revendication 1, caractérisé en ce que dans la formule I: $R_1$, $R_2$, $R_3$, $R_4$, $R_6$ et $R_7$ identiques ou différents, représentent un atome d'hydrogène ou le radical méthyle et $R_5$ et $R_8$ identiques ou différents représentent un atome d'hydrogène ou un radical alkyle ayant de 1 à 4 atomes de carbone.

3. Agent séquestrant supporté selon la revendication 1, caractérisé en ce que dans la formule I: n, m et p identiques ou différents sont supérieurs ou égaux à 1 et inférieurs ou égaux à 6.

4. Agent séquestrant supporté selon la revendication 1, caractérisé en ce que le support polymère organique réticulé dérive d'un polymère organique réticulé comportant des groupements substituables par les groupements fonctionnels de formule I.

5. Agent séquestrant supporté selon la revendication 4 caractérisé en ce que le polymère organique est choisi parmi le groupe comprenant les polymères dérivés de composés vinylaromatiques et les copolymères de composés vinylaromatiques et de diènes conjuguées en $C_4$–$C_6$.

6. Agent séquestrant supporté selon la revendication 5, caractérisé en ce que le polymère organique est choisi parmi le groupe comprenant les polymères du styrène et du méthylstyrène et les copolymères du styrène et du butadiène et du styrène et de l'isoprène.

7. Agent séquestrant supporté selon la revendication 6 caractérisé en ce que le polymère organique est le polystyrène.

8. Agent séquestrant supporté selon les revendications 4 et 7 caractérisé en ce que l'agent de réticulation est le divinylbenzène et en ce que les groupements substituables sont le chlore ou le brome du radical chloro ou bromo méthyl fixé sur les noyaux benzéniques du polystyrène.

9. Agent séquestrant supporté selon la revendication 8, caractérisé en ce que le taux de réticulation est inférieur à 10% et de préférence inférieur à 5%.

10. Agent séquestrant supporté selon la revendication 8 caractérisé en ce que le pourcentage de noyaux benzéniques du polystyrène portant un groupement fonctionnel est supérieur à 5% et de préférence supérieur à 10%.

11. Procédé de préparation d'un agent séquestrant supporté selon l'une quelconque des revendications précédentes caractérisé en ce que l'on fait réagir le composé de formule:

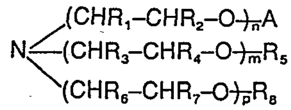

(II)

dans laquelle A représente un métal alcalin et $R_1$, $R_2$, $R_3$, $R_4$, $R_6$ et $R_7$ identiques ou différents sont chacun un atome d'hydrogène ou un radical alkyle ayant de 1 à 4 atomes de carbone, $R_5$ et $R_8$ identiques ou différents représentent un atome d'hydrogène, un radical alkyle ou cycloalkyle ayant de 1 à 12 atomes de carbone, un radical phényle, un radical $-C_qH_{2q}-\Phi$ ou $C_q H_{2q+1}-\Phi-$ avec q supérieur ou égal à 1 et inférieur ou égal à 12, et dans laquelle n, m et p identiques ou différents sont supérieurs ou égaux à 1 et inférieurs ou égaux à 10, avec un polymère organique réticulé comportant des groupements substituables, à une température comprise entre 20 et 150 °C dans un solvant aprotique.

12. Procédé selon la revendication 11, caractérisé en ce que dans la formule II, A représente le sodium ou le potassium.

13. Procédé selon la revendication 11 caractérisé en ce que dans la formule II, $R_1$, $R_2$, $R_3$, $R_4$, $R_6$, et $R_7$ identiques ou différents, représentent un atome d'hydrogène ou le radical méthyle et $R_5$ et $R_8$ identiques ou différents, représentent un atome d'hydrogène ou un radical alkyle ayant de 1 à 4 atomes de carbone.

14. Procédé selon la revendication 11, caractérisé en ce que n, m et p, identiques ou différents, sont supérieurs ou égaux à 1, et inférieurs ou égaux à 6.

15. Procédé selon la revendication 11, caractérisé en ce que le polymère organique est choisi parmi le groupe comprenant les polymères dérivés de composés vinylaromatiques et les copolymères de composés vinylaromatiques et de diènes conjugués en $C_4$–$C_6$.

16. Procédé selon la revendication 15, caractérisé en ce que le polymère organique est choisi parmi le groupe comprenant les polymères du styrène et du méthylstyrène et les copolymères du styrène et du butadiène et du styrène et de l'isoprène.

17. Procédé selon la revendication 16, caractérisé en ce que le polymère organique est le polystyrène.

18. Procédé selon les revendications 11 et 17, caractérisé en ce que l'agent de réticulation est le divinylbenzène et en ce que les groupements substituables sont le chlore ou le brome du radical chloro ou bromo méthyl fixé sur les noyaux benzéniques du polystyrène.

19. Procédé selon la revendication 18, caractérisé en ce que le taux de réticulation est inférieur à 10% et de préférence inférieur à 5%.

20. Procédé selon la revendication 18, caractérisé en ce que le taux de chlore ou de brome est compris entre 0,5 et 7 milliéquivalents de chlore ou de brome par gramme.

21. Application des agents séquestrants supportés selon l'une quelconque des revendications 1 à 10, aux synthèses organiques mettant en œuvre la réaction dans un solvant d'un réactif ionique organique ou minéral normalement insoluble dans le solvant et d'un substrat soluble dans le solvant, caractérisée en ce que l'on ajoute au milieu réactionnel au moins un agent séquestrant ce qui permet la mise en contact dans le milieu réactif et du substrat.

22. Application des agents séquestrants supportés selon l'une quelconque des revendications 1 à 10 à l'extraction d'une solution aqueuse de sels organiques ou minéraux caractérisée en ce que l'on met en contact la solution avec au moins un agent séquestrant supporté.

**Revendications pour l'Etat contractant AT**

1. Procédé de préparation d'un agent séquestrant supporté constitué par un support polymère organique réticulé et par une pluralité de groupes fonctionnels, fixés sur ledit support caractérisé en ce que l'on fait réagir le composé de formule:

$$N\begin{cases}(CHR_1-CHR_2-O)_{\overline{n}}A \\ (CHR_3-CHR_4-O)_{\overline{m}}R_5 \\ (CHR_6-CHR_7-O)_{\overline{p}}R_8\end{cases} \qquad (II)$$

dans laquelle A représente un métal alcalin et $R_1$, $R_2$, $R_3$, $R_4$, $R_6$ et $R_7$ identiques ou différents sont chacun un atome d'hydrogène ou un radical alkyle ayant de 1 à 4 atomes de carbone, $R_5$ et $R_8$ identiques ou différents représentent un atome d'hydrogène, un radical alkyle ou cycloalkyle ayant de 1 à 12 atomes de carbone, un radical phényle, un radical $-C_qH_{2q}-\Phi-$ ou $C_qH_{2q+1}-\Phi-$ avec q supérieur ou égal à 1 et inférieur ou égal à 12, et dans laquelle n, m, et p identiques ou différents sont supérieurs ou égaux à 1 et inférieurs ou égaux à 10, avec un polymère organique réticulé comportant des groupements substituables, à une température comprise entre 20 et 150 °C dans un solvant aprotique.

2. Procédé selon la revendication 1, caractérisé en ce que dans la formule II, A représente le sodium ou le potassium.

3. Procédé selon la revendication 1 caractérisé en ce que dans la formule II, $R_1$, $R_2$, $R_3$, $R_4$, $R_6$ et $R_7$, identiques ou différents, représentent un atome d'hydrogène ou le radical méthyle et $R_5$ et $R_8$ identiques ou différents, représentent un atome d'hydrogène ou un radical alkyle ayant de 1 à 4 atomes de carbone.

4. Procédé selon la revendication 1, caractérisé en ce que n, m et p, identiques ou différents, sont supérieurs ou égaux à 1, et inférieurs ou égaux à 6.

5. Procédé selon la revendication 1, caractérisé en ce que le polymère organique est choisi parmi le groupe comprenant les polymères dérivés de composés vinylaromatiques et les copolymères de composés vinylaromatiques et de diènes conjugués en $C_4$–$C_6$.

6. Procédé selon la revendication 5, caractérisé en ce que le polymère organique est choisi parmi le groupe comprenant les polymères du styrène et du méthylstyrène et les copolymères du styrène et du butadiène et du styrène et de l'isoprène.

7. Procédé selon la revendication 6, caractérisé en ce que le polymère organique est le polystyrène.

8. Procédé selon les revendications 1 et 7, caractérisé en ce que l'agent de réticulation est le divinylbenzène et en ce que les groupements substituables sont le chlore ou le brome du radical chloro ou bromo méthyl fixé sur les noyaux benzéniques du polystyrène.

9. Procédé selon la revendication 8, caractérisé en ce que le taux de réticulation est inférieur à 10% et de préférence inférieur à 5%.

10. Procédé selon la revendication 8, caractérisé en ce que le taux de chlore ou de brome est compris entre 0,5 et 7 milliéquivalents de chlore ou de brome par gramme.

11. Application des agents séquestrants supportés préparés selon l'une quelconque des revendications 1 à 10, aux synthèses organiques mettant en œuvre la réaction dans un solvant d'un réactif ionique organique ou minéral normalement insoluble dans le solvant et d'un substrat soluble dans le solvant, caractérisée en ce que l'on ajoute au milieu réactionnel au moins un agent séquestrant ce qui permet la mise en contact dans le milieu réactif et du substrat.

12. Application des agents séquestrants supportés préparés selon l'une quelconque des revendication s1 à 10 à l'extraction d'une solution aqueuse de sels organiques ou minéraux caractérisée en ce que l'on met en contact la solution avec au moins un agent séquestrant supporté.

**Claims for the Contracting States BE, CH, DE, FR, GB, IT, LI, LU, NL, SE**

1. Supported sequestering agent, characterised in that it consists of a crosslinked organic polymer support and a plurality of functional groups attached to the said support, of general formula:

$$N\begin{cases}(CHR_1-CHR_2-O)_n \\ (CHR_3-CHR_4-O)_mR_5 \\ (CHR_6-CHR_7-O)_pR_8\end{cases} \qquad (I)$$

in which $R_1$, $R_2$, $R_3$, $R_4$, $R_6$ and $R_7$, which are identical or different, are each a hydrogen atom or an alkyl radical containing from 1 to 4 carbon atoms, $R_5$ and $R_8$, which are identical or different, denote a hydrogen atom, an alkyl or cycloalkyl radical containing from 1 to 12 carbon atoms, a phenyl radical, a radical $-C_qH_{2q}-\Phi-$ or $-C_qH_{2q+1}-\Phi-$ with q greater than or equal to 1 and smaller than or equal to 12, and in which n, m, and p, which are identical or different, are greater than or equal to 1 and smaller than or equal to 10.

2. Supported sequestering agent according to

Claim 1, characterised in that in the formula I $R_1$, $R_2$, $R_3$, $R_4$, $R_6$ and $R_7$, which are identical or different, denote a hydrogen atom or the methyl radical and $R_5$ and $R_8$ which are identical or different denote a hydrogen atom or an alkyl radical containing from 1 to 4 carbon atoms.

3. Supported sequestering agent according to Claim 1, characterised in that in the formula I: n, m and p, which are identical or different, are greater than or equal to 1 and smaller than or equal to 6.

4. Supported sequestering agent according to Claim 1, characterised in that the crosslinked organic polymer support is derived from a crosslinked organic polymer containing groups which can be substituted by the functional groups of formula I.

5. Supported sequestering agent according to Claim 4, characterised in that the organic polymer is chosen from the group containing the polymers derived from vinyl aromatic compounds and the copolymers of vinyl aromatic compounds and $C_4$–$C_6$ conjugated dienes.

6. Supported sequestering agent according to Claim 5, characterised in that the organic polymer is chosen from the group containing the polymers of styrene and of methyl styrene and the copolymers of styrene and butadiene and of styrene and isoprene.

7. Supported sequestering agent according to Claim 6, characterised in that the organic polymer is polystyrene.

8. Supported sequestering agent according to Claims 4 and 7, characterised in that the crosslinking agent is divinylbenzene and the groups which can be substituted are chlorine or bromine of the chloro- or bromomethyl radical attached to the benzene rings of polystyrene.

9. Supported sequestering agent according to Claim 8, characterised in that the degree of crosslinking is below 10% and preferably below 5%.

10. Supported sequestering agent according to Claim 8, characterised in that the percentage of benzene rings in the polystyrene carrying a functional group is greater than 5% and preferably greater than 10%.

11. Process for preparing a supported sequestering agent according to any one of the preceding claims, characterised in that the compound of formula:

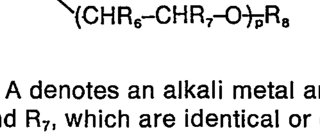

(II)

in which A denotes an alkali metal and $R_1$, $R_2$, $R_3$, $R_4$, $R_6$ and $R_7$, which are identical or different, are each a hydrogen atom or an alkyl radical containing from 1 to 4 carbon atoms, $R_5$ and $R_8$, which are identical or different, denote a hydrogen atom, an alkyl or cycloalkyl radical containing from 1 to 12 carbon atoms, a phenyl radical, a radical $-C_qH_{2q}-\Phi-$ or $C_qH_{2q+1}-\Phi-$ with q greater than or equal to 1 and smaller than or equal to 12, and in which n, m, and p, which are identical or different, are greater than or equal to 1 and smaller than or equal to 10, is reacted with a crosslinked organic polymer containing groups which can be substituted, at a temperature of between 20 and 150 °C in an aprotic solvent.

12. Process according to Claim 11, characterised in that in the formula II A denotes sodium or potassium.

13. Process according to Claim 11, characterised in that in the formula II $R_1$, $R_2$, $R_3$, $R_4$, $R_6$, and $R_7$, which are identical or different, denote a hydrogen atom or the methyl radical and $R_5$ and $R_8$, which are identical or different, denote a hydrogen atom or an alkyl radical containing from 1 to 4 carbon atoms.

14. Process according to Claim 11, characterised in that n, m and p, which are identical or different, are greater than or equal to 1, and smaller than or equal to 6.

15. Process according to Claim 11, characterised in that the organic polymer is chosen from the group containing the polymers derived from vinyl aromatic compounds and the copolymers of vinyl aromatic compounds and $C_4$–$C_6$ conjugated dienes.

16. Process according to Claim 15, characterised in that the organic polymer is chosen from the group containing the polymers of styrene and of methyl styrene and the copolymers of styrene and butadiene and of styrene and isoprene.

17. Process according to Claim 16, characterised in that the organic polymer is polystyrene.

18. Process according to Claims 11 and 17, characterised in that the crosslinking agent is divinylbenzene and in that the groups which can be substituted are the chlorine or bromine of the chloro- or bromomethyl radical attached to the benzene rings of polystyrene.

19. Process according to Claim 18, characterised in that the degree of crosslinking is below 10% and preferably below 5%.

20. Process according to Claim 18, characterised in that the chlorine or bormine content is between 0.5 and 7 milliequivalents of chlorine or bromine per gramme.

21. Application of the supported sequestering agents according to any one of Claims 1 to 10, to organic syntheses employing reaction in a solvent between an organic or inorganic ionic reactant which is normally insoluble in the solvent and a substrate which is soluble in the solvent, characterised in that at least one sequestering agent is added to the reaction medium, which permits the contact in the reaction medium of the reactant and of the substrate.

22. Application of the supported sequestering agents according to any one of Claims 1 to 10, to the extraction of an aqueous solution of organic or inorganic salts, characterised in that the solution is contacted with at least one supported sequestering agent.

**Claims for the Contracting State: AT**

1. Process for preparing a supported sequestering agent consisting of a crosslinked organic polymer support and a plurality of functional groups attached to the said support, characterised in that the compound of formula:

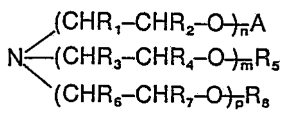

(II)

in which A denotes an alkali metal and $R_1$, $R_2$, $R_3$, $R_4$, $R_6$ and $R_7$, which are identical or different, are each a hydrogen atom or an alkyl radical containing from 1 to 4 carbon atoms, $R_5$ and $R_8$, which are identical or different, denote a hydrogen atom, an alkyl or cycloalkyl radical containing from 1 to 12 carbon atoms, a phenyl radical, a radical $-C_qH_{2q}-\Phi-$ or $C_qH_{2q+1}-\Phi-$ with q greater than or equal to 1 and smaller than or equal to 12, and in which n, m, and p, which are identical or different, are greater than or equal to 1 and smaller than or equal to 10, is reacted with a crosslinked organic polymer containing groups which can be substituted, at a temperature between 20 and 150 °C in an aprotic solvent.

2. Process according to Claim 1, characterised in that in the formula II, A denotes sodium or potassium.

3. Process according to Claim 1, characterised in that in the formula II, $R_1$, $R_2$, $R_3$, $R_4$, $R_6$ and $R_7$, which are identical or different, denote a hydrogen atom or the methyl radical and $R_5$ and $R_8$, which are identical or different, denote a hydrogen atom or an alkyl radical containing from 1 to 4 carbon atoms.

4. Process according to Claim 1, characterised in that n, m and p, which are identical or different, are greater than or equal to 1, and smaller than or equal to 6.

5. Process according to Claim 1, characterised in that the organic polymer is chosen from the group containing the polymers derived from vinyl aromatic compounds and the copolymers of vinyl aromatic compounds and $C_4$–$C_6$ conjugated dienes.

6. Process according to Claim 5, characterised in that the organic polymer is chosen from the group containing the polymers of styrene and of methyl styrene and the copolymers of styrene and butadiene and of styrene and isoprene.

7. Process according to Claim 6, characterised in that the organic polymer is polystyrene.

8. Process according to Claims 1 and 7, characterised in that the crosslinking agent is divinylbenzene and in that the groups which can be substituted are the chlorine or the bromine of the chloro- or bromomethyl radical attached to the benzene rings of the polystyrene.

9. Process according to Claim 8, characterised in that the degree of crosslinking is below 10% and preferably below 5%.

10. Process according to Claim 8, characterised in that the chlorine or bromine content is between 0.5 and 7 milliequivalents of chlorine or bromine per gramme.

11. Application of the supported sequestering agents prepared according to any one of Claims 1 to 10, to organic syntheses employing reaction in a solvent between an organic or inorganic ionic reactant which is normally insoluble in the solvent and a substrate which is soluble in the solvent, characterised in that at least one sequestering agent is added to the reaction medium, which permits the contact in the reaction medium of the reactant and of the substrate.

12. Application of the supported sequestering agent prepared according to any one of Claims 1 to 10 to the extraction of an aqueous solution of organic or inorganic salts, characterised in that the solution is contacted with at least one supported sequestering agent.

**Ansprüche für die Vertragsstaaten: BE, CH, DE, FR, GB, IT, LI, LU, NL, SE**

Sequestrierungsmittel auf einem Träger, dadurch gekennzeichnet, dass es aus einem vernetzten organischen polymeren Träger und einer Vielzahl von auf diesem Träger fixierten funktionellen Gruppen der allgemeinen Formel

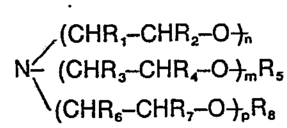

(I)

besteht, in der $R_1$, $R_2$, $R_3$, $R_4$, $R_6$, $R_7$, die gleich oder verschieden sein können, jeweils ein Wasserstoffatom oder ein Alkylradikal mit 1 bis 4 Kohlenstoffatomen, $R_5$ und $R_8$, die gleich oder verschieden sein können, ein Wasserstoffatom, ein Alkyl- oder Cycloalkylradikal mit 1 bis 12 Kohlenstoffatomen, ein Phenylradikal, ein Radikal $-C_qH_{2q}-\Phi-$ oder $-C_qH_{2q+1}-\Phi-$, wobei q Werte von 1 bis 12 annehmen kann, bedeuten und in der n, m und p, die gleich oder verschieden sein können, Werte von 1 bis 10 annehmen können.

2. Sequestrierungsmittel auf einem Träger nach Anspruch 1, dadurch gekennzeichnet, dass in der Formel I $R_1$, $R_2$, $R_3$, $R_4$, $R_6$ und $R_7$, die gleich oder verschieden sein können, ein Wasserstoffatom oder das Methylradikal und $R_5$ und $R_8$, gleich oder verschieden, ein Wasserstoffatom oder ein Alkylradikal mit 1 bis 4 Kohlenstoffatomen bedeuten.

3. Sequestrierungsmittel auf einem Träger nach Anspruch 1, dadurch gekennzeichnet, dass in der Formel I n, m und p, gleich oder verschieden, Werte von 1 bis 6 annehmen können.

4. Sequestrierungsmittel auf einem Träger nach Anspruch 1, dadurch gekennzeichnet, dass der vernetzte organische polymere Träger sich von einem vernetzten organischen Polymeren ableitet, das Gruppen trägt, die durch die funktionellen Gruppen der Formel I substituierbar sind.

5. Sequestrierungsmittel auf einem Träger nach Anspruch 4, dadurch gekennzeichnet, dass das organische Polymer ausgewählt wird aus der

Gruppe, die die von vinylaromatischen Verbindungen abgeleiteten Polymere und die Copolymere von vinylaromatischen Verbindungen und konjugierten $C_4$–$C_6$-Dienen umfasst.

6. Sequestrierungsmittel auf einem Träger nach Anspruch 5, dadurch gekennzeichnet, dass das organische Polymere ausgewählt wird aus der Gruppe, die die Polymeren von Styrol und von Methylstyrol und die Copolymere von Styrol und Butadien und von Styrol und Isopren umfasst.

7. Sequestrierungsmittel auf einem Träger nach Anspruch 6, dadurch gekennzeichnet, dass das organische Polymere Polystyrol ist.

8. Sequestrierungsmittel auf einem Träger nach den Ansprüchen 4 und 7, dadurch gekennzeichnet, dass das Vernetzungsmittel Divinylbenzol ist und dass die substituierbaren Gruppen das Chlor oder das Brom der an die Benzolkerne des Polystyrols gebundenen Chlor- oder Brommethylradikale sind.

9. Sequestrierungsmittel auf einem Träger nach Anspruch 8, dadurch gekennzeichnet, dass der Vernetzungsgrad unter 10% und vorzugsweise unter 5% liegt.

10. Sequestrierungsmittel auf einem Träger nach Anspruch 8, dadurch gekennzeichnet, dass der prozentuale Anteil an Benzolkernen des Polystyrols mit einer funktionellen Gruppe über 5 und vorzugsweise über 10% beträgt.

11. Verfahren zur Herstellung eines Sequestrierungsmittels auf einem Träger nach einem der vorangehenden Ansprüche, dadurch gekennzeichnet, dass die Verbindung der Formel

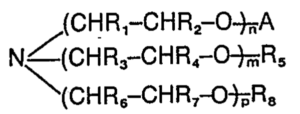

(II)

in der A ein Alkalimetall und $R_1$, $R_2$, $R_3$, $R_4$, $R_6$ und $R_7$, die gleich oder verschieden sein können, jeweils ein Wasserstoffatom oder ein Alkylradikal mit 1 bis 4 Kohlenstoffatomen, $R_5$ und $R_8$, die gleich oder verschieden sein können, ein Wasserstoffatom, ein Alkyl- oder Cycloalkylradikal mit 1 bis 12 Kohlenstoffatomen, ein Phenylradikal, ein Radikal $-C_qH_{2q}-\Phi-$ oder $C_qH_{2q+1}-\Phi-$, wobei q Werte von 1 bis 12 annehmen kann, bedeuten und in der n, m und p, die gleich oder verschieden sein können, Werte von 1 bis 10 annehmen können, mit einem vernetzten organischen Polymer, das substituierbare Gruppen trägt, bei einer Temperatur zwischen 20 und 150 °C in einem aprotischen Lösungsmittel umsetzt.

12. Verfahren nach Anspruch 11, dadurch gekennzeichnet, dass A in der Formel II Natrium oder Kalium bedeutet.

13. Verfahren nach Anspruch 11, dadurch gekennzeichnet, dass in der Formel II $R_1$, $R_2$, $R_3$, $R_4$, $R_6$ und $R_7$, die gleich oder verschieden sein können, ein Wasserstoffatom oder das Methylradikal, und $R_5$ und $R_8$, gleich oder verschieden, ein Wasserstoffatom oder ein Alkylradikal mit 1 bis 4 Kohlenstoffatomen bedeuten.

14. Verfahren nach Anspruch 11, dadurch gekennzeichnet, dass n, m und p, gleich oder verschieden, Werte von 1 bis 6 annehmen können.

15. Verfahren nach Anspruch 11, dadurch gekennzeichnet, dass das organische Polymer ausgewählt wird aus der Gruppe, die die von vinylaromatischen Verbindungen abgeleiteten Polymere und die Copolymere von vinylaromatischen Verbindungen und konjugierten $C_4$–$C_6$-Dienen umfasst.

16. Verfahren nach Anspruch 15, dadurch gekennzeichnet, dass das organische Polymer ausgewählt wird aus der Gruppe, die die Polymere von Styrol und Methylstyrol und die Copolymere von Styrol und Butadien und von Styrol und Isopren umfasst.

17. Verfahren nach Anspruch 16, dadurch gekennzeichnet, dass das organische Polymer Polystyrol ist.

18. Verfahren nach den Ansprüchen 11 und 17, dadurch gekennzeichnet, dass das Vernetzungsmittel Divinylbenzol ist und dass die substituierbaren Gruppen das Chlor oder das Brom der an die Benzolkerne des Polystyrols gebundenen Chlor- oder Brommethylradikale sind.

19. Verfahren nach Anspruch 18, dadurch gekennzeichnet, dass der Vernetzungsgrad unter 10% und vorzugsweise unter 5% liegt.

20. Verfahren nach Anspruch 18, dadurch gekennzeichnet, dass der Chlor- oder Bromgehalt zwischen 0,5 und 7 Milliäquivalent Chlor oder Brom pro Gramm liegt.

21. Anwendung der auf einem Träger befindlichen, nach einem der Ansprüche 1 bis 10 hergestellten Sequestrierungsmittel bei organischen Synthesen, indem man in einem Lösungsmittel einen organischen oder anorganischen ionischen Reaktionspartner, der normalerweise in dem Lösungsmittel unlöslich ist, und ein in dem Lösungsmittel lösliches Substrat umsetzt, dadurch gekennzeichnet, dass man zu dem Reaktionsmedium wenigstens ein Sequestrierungsmittel zusetzt, das in dem Reaktionsmedium den Kontakt zwischen Substrat und Reaktionspartner ermöglicht.

22. Anwendung der auf einem Träger befindlichen, nach einem der Ansprüche 1 bis 10 hergestellten Sequestrierungsmittel bei der Extraktion einer wässrigen Lösung organischer oder anorganischer Salze, dadurch gekennzeichnet, dass man die Lösung mit wenigstens einem auf einem Träger befindlichen Sequestrierungsmittel zusammenbringt.

**Ansprüche für den Vertragsstaat: AT**

1. Verfahren zur Herstellung eines Sequestrierungsmittels auf einem Träger, das aus einem vernetzten organischen polymeren Träger mit einer Vielzahl von auf diesem Träger fixierten funktionellen Gruppen besteht, dadurch gekennzeichnet, dass man die Verbindung der Formel

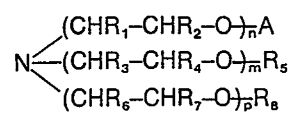

(II)

in der A ein Alkalimetall und $R_1$, $R_2$, $R_3$, $R_4$, $R_6$ und $R_7$, die gleich oder verschieden sein können, jeweils ein Wasserstoffatom oder ein Alkylradikal mit 1 bis 4 Kohlenstoffatomen, $R_5$ und $R_8$, die gleich oder verschieden sein können, ein Wasserstoffatom, ein Alkyl- oder Cycloalkylradikal mit 1 bis 12 Kohlenstoffatomen, ein Phenylradikal, ein Radikal $-C_qH_{2q}-\Phi-$ oder $C_qH_{2q+1}-\Phi-$, wobei q Werte von 1 bis 12 annehmen kann, bedeuten und in der n, m und p, die gleich oder verschieden sein können, Werte von 1 bis 10 annehmen können, mit einem vernetzten organischen Polymer, das substituierbare Gruppen trägt, bei einer Temperatur zwischen 20 und 150 °C in einem aprotischen Lösungsmittel umsetzt.

2. Verfahren nach Anspruch 1, dadurch gekennzeichnet, dass A in der Formel II Natrium oder Kalium bedeutet.

3. Verfahren nach Anspruch 1, dadurch gekennzeichnet, dass in der Formel II $R_1$, $R_2$, $R_3$, $R_4$, $R_6$ und $R_7$, die gleich oder verschieden sein können, ein Wasserstoffatom oder das Methylradikal, und $R_5$ und $R_8$, gleich oder verschieden, ein Wasserstoffatom oder ein Alkylradikal mit 1 bis 4 Kohlenstoffatomen bedeuten.

4. Verfahren nach Anspruch 1, dadurch gekennzeichnet, dass n, m und p, gleich oder verschieden, Werte von 1 bis 6 annehmen können.

5. Verfahren nach Anspruch 1, dadurch gekennzeichnet, dass das organische Polymer ausgewählt wird aus der Gruppe, die die von vinylaromatischen Verbindungen abgeleiteten Polymere und die Copolymere von vinylaromatischen Verbindungen und konjugierten $C_4$–$C_6$-Dienen umfasst.

6. Verfahren nach Anspruch 5, dadurch gekennzeichnet, dass das organische Polymer ausgewählt wird aus der Gruppe, die die Polymere von Styrol und Methylstyrol und die Copolymere von Styrol und Butadien und von Styrol und Isopren umfasst.

7. Verfahren nach Anspruch 6, dadurch gekennzeichnet, dass das organische Polymer Polystyrol ist.

8. Verfahren nach den Ansprüchen 1 und 7, dadurch gekennzeichnet, dass das Vernetzungsmittel Divinylbenzol ist und dass die substituierbaren Gruppen das Chlor oder das Brom der an die Benzolkerne des Polystyrols gebundenen Chlor- oder Brommethylradikale sind.

9. Verfahren nach Anspruch 8, dadurch gekennzeichnet, dass der Vernetzungsgrad unter 10% und vorzugsweise unter 5% liegt.

10. Verfahren nach Anspruch 8, dadurch gekennzeichnet, dass der Chlor- oder Bromgehalt zwischen 0,5 und 7 Milliäquivalent Chlor oder Brom pro Gramm liegt.

11. Anwendung der auf einem Träger befindlichen, nach einem der Ansprüche 1 bis 10 hergestellten Sequestrierungsmittel bei organischen Synthesen, indem man in einem Lösungsmittel einen organischen oder anorganischen ionischen Reaktionspartner, der normalerweise in dem Lösungsmittel unlöslich ist, und ein in dem Lösungsmittel lösliches Substrat umsetzt, dadurch gekennzeichnet, dass man zu dem Reaktionsmedium wenigstens ein Sequestrierungsmittel zusetzt, das in dem Reaktionsmedium den Kontakt zwischen Substrat und Reaktionspartner ermöglicht.

12. Anwendung der auf einem Träger befindlichen, nach einem der Ansprüche 1 bis 10 hergestellten Sequestrierungsmittel bei der Extraktion einer wässrigen Lösung organischer oder anorganischer Salze, dadurch gekennzeichnet, dass man die Lösung mit wenigstens einem auf einem Träger befindlichen Sequestrierungsmittel zusammenbringt.